# FASCICULE DE BREVET EUROPEEN

(11) **EP 2 064 506 B1**
(45) Date de publication et mention de la délivrance du brevet: **28.12.2016**
(21) Numéro de dépôt: 07820309.8
(22) Date de dépôt: 18.09.2007
(51) Int. Cl.: F28D 1/03, F28D 7/16, F28D 9/00, F28F 9/02

(54) **ECHANGEUR DE CHALEUR, EN PARTICULIER REFROIDISSEUR D'AIR DE SURALIMENTATION**
WÄRMETAUSCHER, INSBESONDERE EIN SYSTEMLUFTKÜHLER
HEAT EXCHANGER, IN PARTICULAR CHARGE AIR COOLER

(30) Priorité: 19.09.2006 FR 0608233
(43) Date de publication de la demande: 03.06.2009
(73) Titulaire: Valeo Systèmes Thermiques, 78321 Le Mesnil Saint Denis Cedex (FR)
(72) Inventeur: DAY, Alan, 51100 Reims (FR)
(74) Mandataire: Metz, Gaëlle
(86) Numéro de dépôt international: PCT/EP2007/059859
(87) Numéro de publication internationale: WO 2008/034829

(56) Documents cités:
- EP-A- 1 296 108
- EP-A- 1 544 564
- EP-A- 1 707 911
- EP-A1- 1 710 526
- WO-A-03/081159
- WO-A-2005/001272
- DE-A1- 19 853 455
- DE-A1- 19 902 504
- DE-A1-102005 013 922
- FR-A1- 2 837 917
- FR-A1- 2 855 605
- JP-A- 2002 071 283
- US-A1- 2002 134 529

## Description

L'invention se rapporte au domaine des échangeurs de chaleur, notamment pour véhicules automobiles.

Elle concerne plus particulièrement un échangeur de chaleur comportant un faisceau d'échange de chaleur déterminant de premiers canaux de circulation pour la circulation d'un gaz à refroidir et de seconds canaux de circulation pour la circulation d'un liquide de refroidissement.

Un tel échangeur de chaleur peut être réalisé notamment sous la forme d'un refroidisseur d'air de suralimentation d'un moteur thermique de véhicule automobile, le gaz à refroidir étant alors constitué par l'air de suralimentation du moteur.

Des exemples d'échangeurs de chaleur de ce type sont connus notamment d'après les publications de brevet DE 199 02 504, JP 102 38 969, DE 199 27 607, DE 195 11 991, JP 111 93 998 et EP 0 992 756.

Toutefois, tous ces échangeurs connus ne permettent pas une adaptation aisée sur un véhicule et/ou semblent difficilement industrialisables en grande série.

L'invention a notamment pour but de surmonter ces inconvénients.

Elle vise en particulier à procurer un échangeur de chaleur du type précité offrant une grande souplesse d'utilisation et susceptible de s'adapter à de nombreuses architectures du moteur et du véhicule.

L'invention vise encore à procurer un tel échangeur de chaleur qui convient tout particulièrement comme refroidisseur d'air de suralimentation.

L'invention propose à cet effet un échangeur de chaleur du type défini en introduction, lequel comprend en outre deux collecteurs assemblés respectivement sur deux faces du faisceau, dans lesquelles débouchent les premiers canaux de circulation, ainsi qu'un boîtier d'entrée de gaz et un boîtier de sortie de gaz présentant chacun une face ouverte délimitée par un rebord périphérique maintenu par sertissage dans un collecteur.

Ainsi, l'échangeur de chaleur de l'invention comprend un faisceau encadré, sur deux faces ouvertes de ce dernier par où passe le gaz à refroidir, par deux collecteurs servant respectivement au sertissage d'un boîtier d'entrée de gaz et d'un boîtier de sortie de gaz.

Il en résulte qu'avec un même faisceau d'échange de chaleur, il est possible de réaliser une multiplicité d'échangeurs de chaleur dont les boîtiers d'entrée et de sortie de gaz pourront être adaptés à chaque fois en fonction de l'application considérée.

Dans ces conditions, l'échangeur de chaleur de l'invention peut être adapté à chaque fois à l'architecture du moteur et/ou du véhicule auquel il est destiné.

Dans l'échangeur de chaleur de l'invention, le faisceau est constitué par un empilement de plaques embouties disposées par paires en sorte que les premiers canaux sont délimités chacun entre deux paires de plaques et que les seconds canaux sont délimités chacun entre les plaques d'une même paire, chacune des plaques embouties présentant une forme générale rectangulaire et comporte une paroi de fond sensiblement plane limitée par un rebord périphérique et deux bossages d'extrémité dotés d'ouvertures pour le passage du liquide de refroidissement d'un second canal à un autre second canal. Selon l'invention, le rebord périphérique de chacune des plaques embouties est aménagé pour définir des agrafes servant au maintien provisoire de deux plaques d'une même paire en vue de leur liaison par brasage.

De préférence, chaque collecteur a la forme générale d'un cadre et comporte un bord périphérique de forme générale rectangulaire délimitant l'ouverture de passage de gaz et présentant d'un côté un rebord en épaulement pour la réception d'une face du faisceau et d'un autre côté un rebord de sertissage entourant une gorge pour la réception du rebord périphérique du boîtier d'entrée de gaz ou du boîtier de sortie de gaz.

Le rebord en épaulement est avantageusement conformé pour permettre un emboîtement du faisceau avec compression. Dans ces conditions, il n'est pas nécessaire d'utiliser un outil de maintien pour le brasage.

Les deux collecteurs sont avantageusement assemblés respectivement sur deux faces opposées du faisceau.

De préférence, chaque collecteur comporte une partie masquée pour empêcher le passage du gaz dans une région d'extrémité du faisceau qui est dépourvu des premiers canaux.

Selon l'invention, le faisceau est constitué par un empilement de plaques embouties disposées par paires en sorte que les premiers canaux sont délimités chacun entre deux paires de plaques et que les seconds canaux sont délimités chacun entre les plaques d'une même paire.

Chacune des plaques embouties présente une forme générale rectangulaire et comporte une paroi de fond sensiblement plane limitée par un rebord périphérique et deux bossages d'extrémité dotés d'ouvertures pour le passage du liquide de refroidissement d'un second canal à un autre second canal.

La paroi de fond de chacune des plaques embouties comporte de préférence une nervure pour définir un second canal de circulation avec un parcours en U.

Selon l'invention, le rebord périphérique de chacune des plaques embouties est aménagé pour définir des agrafes servant au maintien provisoire de deux plaques d'une même paire en vue de leur liaison par brasage.

L'une des plaques embouties, disposée en extrémité du faisceau, porte avantageusement deux tubulures pour l'entrée et la sortie du liquide de refroidissement.

Le faisceau peut comporter en outre des intercalaires ondulés disposés respectivement dans les premiers canaux.

Dans une forme de réalisation préférée de l'invention, le boîtier d'entrée de gaz et le boîtier de sortie de gaz sont réalisés chacun par moulage avec une forme choisie, avantageusement par moulage d'une matière plastique.

Cependant, il entre également dans le cadre de l'invention de réaliser ces deux boîtiers par moulage d'une matière métallique, par exemple d'un alliage d'aluminium.

Dans une application préférentielle de l'invention, l'échangeur de chaleur est réalisé sous la forme d'un refroidisseur d'air de suralimentation d'un moteur thermique de véhicule automobile, les premiers canaux de circulation servant à la circulation de l'air à refroidir.

Le boîtier d'entrée de gaz et le boîtier de sortie de gaz peuvent être munis chacun d'une tubulure venue de moulage. Le refroidisseur d'air de suralimentation est dans ce cas indépendant.

En variante, le boîtier d'entrée de gaz peut être muni d'une tubulure venue de moulage, tandis que le boîtier de sortie de gaz peut constituer un diffuseur d'admission d'air pour le moteur thermique du véhicule. En ce cas, le refroidisseur d'air de suralimentation est lié au diffuseur d'admission d'air du moteur.

Dans la description qui suit, faite seulement à titre d'exemple, on se réfère aux dessins annexés, sur lesquels :
- la figure 1 est une vue en perspective d'un échangeur de chaleur selon une première forme de réalisation de l'invention ;
- la figure 2 est une vue en perspective du faisceau de l'échangeur de chaleur de la figure 1 ;
- la figure 3 est une vue en coupe selon la ligne III-III de la figure 2 ;
- la figure 4 est une vue en coupe selon la ligne IV-IV de la figure 2 ;
- la figure 5 est une vue en coupe selon la ligne V-V de la figure 2 ;
- la figure 6 est une vue en perspective montrant le faisceau de la figure 2 avant assemblage des collecteurs ;
- la figure 7 est une vue en perspective analogue à la figure 6 montrant le faisceau équipé des deux collecteurs et de deux tubulures d'entrée et de sortie du liquide de refroidissement ;
- la figure 8 est une vue en perspective éclatée montrant le faisceau de la figure 7 avant assemblage des boîtiers d'entrée et de sortie d'air ; et
- la figure 9 est une vue en perspective d'un échangeur de chaleur selon une deuxième forme de réalisation de l'invention.

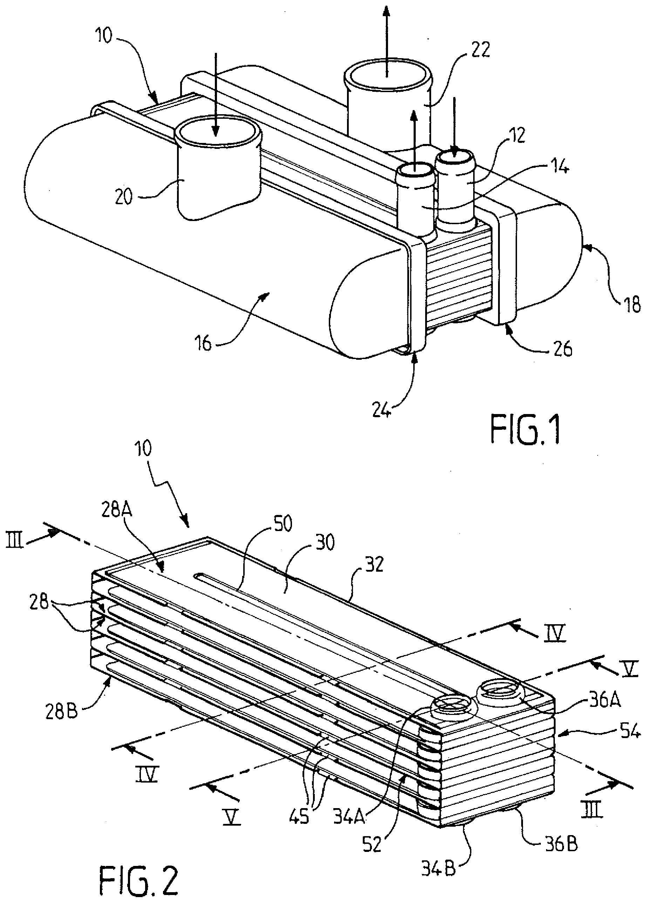

L'échangeur de chaleur représenté à la figure 1 comprend un faisceau 10 d'échange de chaleur qui est
formé par un assemblage de plaques empilées, comme cela sera décrit plus loin. Le faisceau 10 est muni de deux tubulures 12 et 14 servant respectivement à l'entrée et à la sortie d'un liquide de refroidissement. Le faisceau est encadré, sur deux faces ouvertes opposées, respectivement par un boîtier d'entrée de gaz 16 et un boîtier de sortie de gaz 18 munis respectivement d'une tubulure d'entrée de gaz 20 et d'une tubulure de sortie de gaz 22.

Les boîtiers 16 et 18 et leurs tubulures respectives 20 et 22 sont réalisés par moulage à la forme voulue et sont assemblés de part et d'autre du faisceau par l'intermédiaire de deux collecteurs 24, 26. Les boîtiers 16 et 18 sont assemblés par sertissage dans les collecteurs 24 et 26.

Le gaz à refroidir pénètre dans le boîtier d'entrée de gaz 16 au travers de la tubulure 20, traverse ensuite de premiers canaux de circulation (décrits plus loin) du faisceau 10 pour gagner le boîtier de sortie de gaz 18 et quitter ce dernier par la tubulure 22. Le gaz est refroidi par un liquide de refroidissement qui pénètre dans le faisceau 10 par la tubulure 12, circule dans de seconds canaux (décrits plus loin) du faisceau pour échanger de la chaleur avec le gaz à refroidir et quitte ensuite le faisceau par la tubulure 14.

Dans un exemple de réalisation préféré de l'invention, l'échangeur est réalisé sous la forme d'un refroidisseur d'air de suralimentation d'un moteur thermique de véhicule automobile. Dans ce cas, le gaz à refroidir est l'air de suralimentation qui provient du turbo-compresseur et qui doit être admis dans le moteur thermique au travers d'un diffuseur d'admission d'air. Le liquide de refroidissement est généralement le liquide servant au refroidissement du moteur.

On se réfère maintenant aux figures 2 à 5 pour décrire la structure du faisceau 10. Le faisceau est
formé par un assemblage de plaques embouties 28, encore appelées demi-lames, selon une technique en soi connue.

Comme le montre la figure 2, le faisceau 10 est formé par un empilement de plaques embouties 28 disposées par paires, réalisées identiques, à l'exception des deux plaques d'extrémité, à savoir la plaque 28A qui reçoit les tubulures 12 et 14 précitées et la plaque opposée 28B.

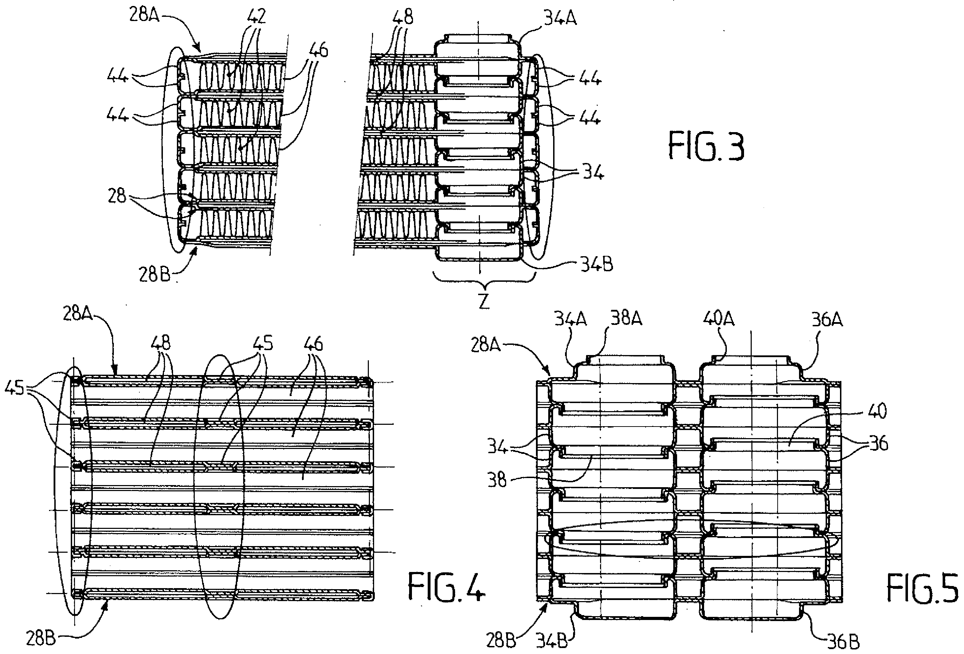

Chacune des plaques embouties 28 présente une forme générale rectangulaire et comporte une paroi de fond 30 sensiblement plane limitée par un rebord périphérique 32 de forme générale rectangulaire, qui est surélevé par rapport à la paroi de fond pour former une cuvette peu profonde. En outre, chacune des plaques 28 comporte deux bossages d'extrémité 34 et 36 munis d'ouvertures respectives 38 et 40 de forme circulaire (figure 5). Comme on le voit plus particulièrement sur les figures 3 et 4, les plaques embouties 28 sont disposées par paires et les bossages respectifs d'une plaque appartenant à une paire sont en communication avec les bossages respectifs d'une plaque voisine appartenant à une paire de plaques voisines. Ceci permet d'établir une communication de fluide entre les chambres que délimitent les paires respectives de plaques.

Le faisceau 10 comporte en outre des intercalaires ondulés 42 (figure 3) disposés à chaque fois entre des paires de plaques voisines. Ces intercalaires ondulés 42 ont leurs ondulations respectives brasées sur les parois de fond 30 respectives de deux plaques 28 en vis-à-vis. Les rebords périphériques respectifs 32 de deux plaques appartenant à une même paire sont brasés sur toute leur périphérie pour définir des canaux ou lames de circulation du liquide de refroidissement, qui communiquent entre eux au travers des bossages respectifs. Par ailleurs, les petits côtés des plaques ont à chaque fois un bord 44 replié en U, ce qui permet d'assembler les paires de plaques entre elles en délimitant des canaux de circulation pour le gaz à refroidir (voir les régions entourées par un ovale sur la figure 3) . Ainsi, le faisceau délimite des premiers canaux 46 pour le gaz à refroidir, dans lesquels sont présents les intercalaires ondulés 42, et des seconds canaux 48 pour la circulation du liquide de refroidissement (figures 3 et 4).

Du fait que les bords 44 des plaques sont jointifs, on définit ainsi une veine de gaz pour le gaz à refroidir qui traverse simultanément l'ensemble des premiers canaux 46 pour être refroidis par le liquide de refroidissement qui circule dans les seconds canaux 48.

Comme on le voit sur la figure 4, des agrafes 45 sont formées sur le rebord périphérique 32 des plaques 28 pour permettre un assemblage provisoire des plaques de chaque paire avant leur assemblage définitif par brasage.

La figure 5 montre que les plaques 28 sont symétriques et que leurs bossages respectifs forment des collets permettant un auto-centrage des plaques entre elles de manière à garantir un bon assemblage par brasage.

Les bossages 34A et 36A de la plaque 28A sont différents et des bossages 34 et 36 des plaques courantes et ont des ouvertures respectives 38A et 40A adaptées pour la réception des tubulures respectives 14 et 16. De même, la plaque 28B a des bossages 34B et 36B différents puisqu'ils comportent à chaque fois une paroi fermée donc dépourvue d'ouverture.

La paroi de fond 30 de chacune des plaques embouties 28 comporte une nervure 50 qui s'étend parallèlement aux grands côtés, sur une longueur inférieure à celle d'un grand côté, pour définir un parcours de circulation en U dans chaque second canal (figure 2).

Ainsi, comme on peut le voir sur la figure 2, le faisceau 10 comporte deux faces ouvertes opposées : une face ouverte 52 du côté de l'entrée des gaz et une face ouverte 54 du côté de la sortie des gaz. Les premiers canaux 46 débouchent à la fois dans les faces 52 et 54 précitées.

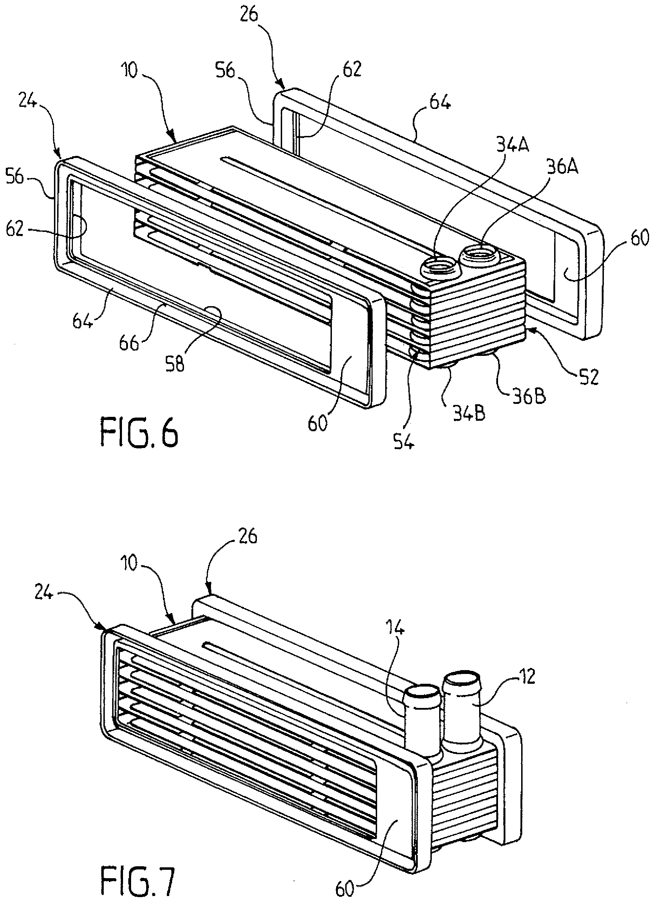

Sur les faces ouvertes 52 et 54 sont assemblés respectivement les collecteurs 24 et 26 comme on le voit sur la vue éclatée de la figure 6. Les collecteurs 24 et 26 sont identiques et sont réalisés sous la forme d'un cadre de forme générale rectangulaire. Chaque collecteur comporte un bord périphérique 56 de forme générale rectangulaire délimitant une ouverture de passage de gaz 58 en vis-à-vis de la face ouverte 52 ou 54 du faisceau. On notera que chaque collecteur 24 ou 26 comporte une partie masquée 60 (figures 6 et 7) pour empêcher le passage du gaz dans une région d'extrémité du faisceau qui est dépourvue des premiers canaux. Cette région d'extrémité correspond à la partie du faisceau qui est dépourvue d'intercalaires ondulés et qui comporte des bossages. Ainsi, le gaz à refroidir est canalisé dans la partie utile du faisceau, c'est à dire celle qui correspond aux premiers canaux et qui comporte des intercalaires ondulés.

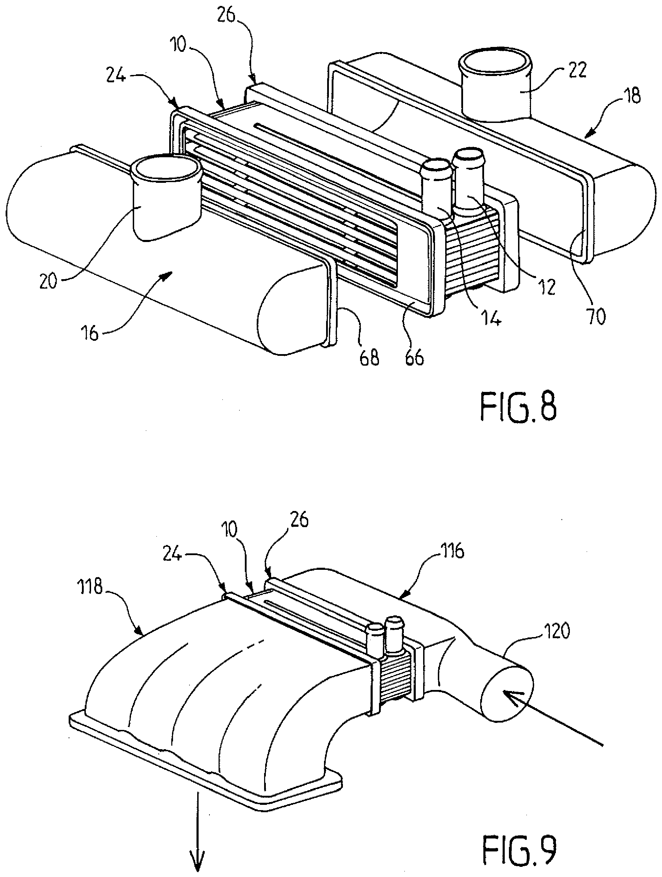

Le bord périphérique 56 de chaque collecteur présente, du côté tourné vers le faisceau, un rebord en épaulement 62 pour la réception de la face ouverte 52 ou 54 du faisceau et de l'autre côté un rebord de sertissage 64 entourant une gorge 66 pour la réception d'un rebord périphérique 68 respectivement 70 du boîtier 16 ou du boîtier 18 (figure 8). Le rebord en épaulement 62 est conformé pour permettre un emboîtement du faisceau avec compression, ce qui permet de se passer d'un outil de maintien pour le brasage. Le rebord périphérique 68 ou 70 du boîtier 16 ou 18 peut être reçu dans la gorge 66 du collecteur correspondant 24 ou 26 et être serti par le rebord de sertissage 64 correspondant. Ce rebord de sertissage peut être constitué de manière conventionnelle par un rebord crénelé à languettes repliables, par un rebord à ondulations, etc.

L'ensemble des constituants du faisceau, à savoir les plaques embouties, les intercalaires ondulés, les collecteurs et les tubulures d'entrée et de sortie du liquide de refroidissement sont avantageusement réalisés dans un alliage d'aluminium, assemblés entre eux et brasés en une seule opération dans un four de brasage. Le faisceau ainsi obtenu est ensuite assemblé par sertissage à un boîtier d'entrée de gaz et à un boîtier de sortie de gaz de forme voulue.

Dans l'exemple représenté sur les figures 1 à 8, les boîtiers 16 et 18 sont munis chacun d'une tubulure 20 ou 22, ce qui permet de réaliser un échangeur de chaleur indépendant. Il peut s'agir d'un refroidisseur d'air de suralimentation qui peut être placé en un endroit choisi sous le capot moteur du véhicule. Dans ce cas, des conduites appropriées sont fixées sur les tubulures 20 et 22.

L'invention permet de conformer les boîtiers 16 et 18 en fonction de l'architecture du véhicule et/ou de l'architecture du moteur.

Ces boîtiers d'entrée et de sortie d'air peuvent être réalisés en matière plastique, ou en une autre matière appropriée, par exemple en un alliage métallique tel qu'un alliage d'aluminium.

Dans l'exemple représenté sur la figure 9, le boîtier d'entrée de gaz 116 est muni d'une tubulure d'entrée de gaz 120 qui est disposée avec une orientation différente de celle de la tubulure 20 de l'exemple de réalisation précédent.

Egalement, le boîtier de sortie de gaz 118 constitue un diffuseur d'admission d'air pour le moteur thermique du véhicule. Ceci permet de relier l'échangeur de chaleur, ici le refroidisseur d'air de suralimentation, directement au moteur, sans avoir à prévoir une conduite intermédiaire comme dans le cas du mode de réalisation des figures 1 à 8.

L'invention trouve une application particulière aux refroidisseurs d'air de suralimentation pour véhicules automobiles.

## Revendications

1. Échangeur de chaleur comportant un faisceau d'échange de chaleur (10) déterminant de premiers canaux de circulation (46) pour la circulation d'un gaz à refroidir et de seconds canaux de circulation (48) pour la circulation d'un liquide de refroidissement, comprenant en outre deux collecteurs (24, 26) assemblés respectivement sur deux faces (52, 54) du faisceau, dans lesquelles débouchent les premiers canaux de circulation, ainsi qu'un boîtier d'entrée de gaz (16) et un boîtier de sortie de gaz (18) présentant chacun une face ouverte délimitée par un rebord périphérique (68, 70) maintenu par sertissage dans l'un desdits collecteurs, le faisceau (10) étant constitué par un empilement de plaques embouties (28) disposées par paires en sorte que les premiers canaux (46) sont délimités chacun entre deux paires de plaques et que les seconds canaux (48) sont délimités chacun entre les plaques d'une même paire, chacune des plaques embouties (28) du faisceau présentant une forme générale rectangulaire et comportant une paroi de fond (30) sensiblement plane limitée par un rebord périphérique (32) et deux bossages d'extrémité (34, 35) dotés d'ouvertures (38, 40) pour le passage du liquide de refroidissement d'un second canal à un autre second canal, le rebord périphérique (32) de chacune des plaques embouties (28) étant aménagé pour définir
des agrafes (45) servant au maintien provisoire de deux plaques d'une même paire en vue de leur liaison par brasage.

2. Échangeur de chaleur selon la revendication 1, **caractérisé en ce que** chaque collecteur (24, 26) a la forme générale d'un cadre et comporte un bord périphérique (56) de forme générale rectangulaire délimitant une ouverture (58) de passage de gaz et présentant d'un côté un rebord en épaulement (62) pour la réception d'une face du faisceau et d'un autre côté un rebord de sertissage (64) entourant une gorge (66) pour la réception du rebord périphérique (68, 70) du boîtier d'entrée de gaz (16) ou du boîtier de sortie de gaz (18).

3. Échangeur de chaleur selon la revendication 2, **caractérisé en ce que** le rebord en épaulement (62) est conformé pour permettre un emboîtement du faisceau avec compression.

4. Échangeur de chaleur selon l'une des revendications 1 à 3, **caractérisé en ce que** les deux collecteurs (24, 26) sont assemblés respectivement sur deux faces opposées (52, 54) du faisceau.

5. Échangeur de chaleur selon l'une des revendications 1 à 4, **caractérisé en ce que** chaque collecteur (24, 26) comporte une partie masquée (60) pour empêcher le passage du gaz dans une région d'extrémité du faisceau (10) qui est dépourvue des premiers canaux (46).

6. Échangeur de chaleur selon l'une quelconque des revendications précédentes, **caractérisé en ce que** la paroi de fond (30) de chacune des plaques embouties (28) comporte une nervure (50) pour définir un second canal de circulation avec un parcours en U.

7. Échangeur de chaleur selon l'une quelconque des revendications précédentes, **caractérisé en ce que** l'une (28A) des plaques embouties disposée en extrémité du faisceau porte deux tubulures (12, 14) pour l'entrée et la sortie du liquide de refroidissement.

8. Échangeur de chaleur selon l'une quelconque des revendications précédentes, **caractérisé en ce que** le faisceau (10) comporte en outre des intercalaires ondulés (42) disposés respectivement dans les premiers canaux (46).

9. Échangeur de chaleur selon l'une quelconque des revendications précédentes, **caractérisé en ce que** le boîtier d'entrée de gaz (16) et le boîtier de sortie de gaz (18) sont réalisés chacun par moulage avec une forme choisie.

10. Échangeur de chaleur selon l'une quelconque des revendications précédentes, **caractérisé en ce que** le boîtier d'entrée de gaz (16) et le boîtier de sortie de gaz (18) sont réalisés chacun par moulage d'une matière plastique.

11. Échangeur de chaleur selon l'une quelconque des revendications précédentes, **caractérisé en ce qu'**il est réalisé sous la forme d'un refroidisseur d'air de suralimentation d'un moteur thermique de véhicule automobile, les premiers canaux de circulation (46) servant à la circulation de l'air à refroidir.

12. Échangeur de chaleur selon la revendication 11, **caractérisé en ce que** le boîtier d'entrée de gaz (16) et le boîtier de sortie de gaz (18) sont munis chacun d'une tubulure (20, 22) venue de moulage.

13. Échangeur de chaleur selon la revendication 11, **caractérisé en ce que** le boîtier d'entrée de gaz (116) est muni d'une tubulure (120) venue de moulage, tandis que le boîtier de sortie de gaz (118) constitue un diffuseur d'admission d'air pour le moteur thermique du véhicule.

## Patentansprüche

1. Wärmetauscher, der ein Wärmetauscherbündel (10) aufweist, das erste Durchflusskanäle (46) für den Durchfluss eines zu kühlenden Gases und zweite Durchflusskanäle (48) für den Durchfluss eines Kühlmittels bestimmt, der außerdem zwei Sammler (24, 26), die auf zwei Seiten (52, 54) des Bündels montiert sind, in die die ersten Durchflusskanäle münden, sowie ein Gaseinlassgehäuse (16) und ein Gasauslassgehäuse (18) enthält, die je eine offene Seite aufweisen, die von einer Umfangsrandleiste (68, 70) begrenzt wird, die durch Einklemmen in einen der Sammler gehalten wird, wobei das Bündel (10) aus einer Stapelung von tiefgezogenen Platten (28) besteht, die paarweise angeordnet sind, so dass die ersten Kanäle (46) je zwischen zwei Plattenpaaren begrenzt sind und die zweiten Kanäle (48) je zwischen den Platten eines gleichen Paars begrenzt sind, wobei jede der tiefgezogenen Platten (28) des Bündels eine allgemein rechtwinklige Form hat und eine im Wesentlichen ebene Bodenwand (30) aufweist, die von einer Umfangrandleiste (32) und zwei Endansätzen (34, 36) begrenzt wird, die mit Öffnungen (38, 40) für den Durchgang des Kühlmittels von einem zweiten Kanal zu einem anderen zweiten Kanal versehen sind, wobei die Umfangsrandleiste (32) jeder der tiefgezogenen Platten (28) eingerichtet ist, um Klammern (45) zu definieren, die zum provisorischen Halt von zwei Platten eines gleichen Paars zum Zweck ihrer Lötverbindung dienen.

2. Wärmetauscher nach Anspruch 1, **dadurch gekennzeichnet, dass** jeder Sammler (24, 26) die allgemeine Form eines Rahmens hat und einen Umfangsrand (56) allgemein rechtwinkliger Form aufweist, der eine Gasdurchgangsöffnung (58) begrenzt und auf einer Seite eine schulterförmige Randleiste (62) zur Aufnahme einer Seite des Bündels und auf einer anderen Seite eine Einklemmrandleiste (64) hat, die eine Rille (66) zur Aufnahme der Umfangsrandleiste (68, 70) des Gaseinlassgehäuses (16) oder des Gasauslassgehäuses (18) umgibt.

3. Wärmetauscher nach Anspruch 2, **dadurch gekennzeichnet, dass** die schulterförmige Randleiste (62) ausgebildet ist, um ein Presseinpassen des Bündels zu erlauben.

4. Wärmetauscher nach einem der Ansprüche 1 bis 3, **dadurch gekennzeichnet, dass** die zwei Sammler (24, 26) je auf zwei gegenüberliegende Seiten (52, 54) des Bündels montiert sind.

5. Wärmetauscher nach einem der Ansprüche 1 bis 4, **dadurch gekennzeichnet, dass** jeder Sammler (24, 26) einen verdeckten Teil (60) aufweist, um den Durchgang des Gases in einen Endbereich des Bündels (10) zu verhindern, der keine ersten Kanäle (46) aufweist.

6. Wärmetauscher nach einem der vorhergehenden Ansprüche, **dadurch gekennzeichnet, dass** die Bodenwand (30) jeder der tiefgezogenen Platten (28) eine Rippe (50) aufweist, um einen zweiten Durchflusskanal mit einem U-förmigen Streckenverlauf zu definieren.

7. Wärmetauscher nach einem der vorhergehenden Ansprüche, **dadurch gekennzeichnet, dass** eine (28A) der am Ende des Bündels angeordneten tiefgezogenen Platten zwei Rohrstutzen (12, 14) für den Einlass und den Auslass des Kühlmittels trägt.

8. Wärmetauscher nach einem der vorhergehenden Ansprüche, **dadurch gekennzeichnet, dass** das Bündel (10) außerdem gewellte Zwischenstücke (42) aufweist, die in den ersten Kanälen (46) angeordnet sind.

9. Wärmetauscher nach einem der vorhergehenden Ansprüche, **dadurch gekennzeichnet, dass** das Gaseinlassgehäuse (16) und das Gasauslassgehäuse (18) je durch Formen mit einer gewählten Form hergestellt werden.

10. Wärmetauscher nach einem der vorhergehenden Ansprüche, **dadurch gekennzeichnet, dass** das Gaseinlassgehäuse (16) und das Gasauslassgehäuse (18) je durch Formen eines Kunststoffs hergestellt werden.

11. Wärmetauscher nach einem der vorhergehenden Ansprüche, **dadurch gekennzeichnet, dass** er in Form eines Ladeluftkühlers eines Verbrennungsmotors eines Kraftfahrzeugs hergestellt wird, wobei die ersten Durchflusskanäle (46) für den Durchfluss der zu kühlenden Luft dienen.

12. Wärmetauscher nach Anspruch 11, **dadurch gekennzeichnet, dass** das Gaseinlassgehäuse (16) und das Gasauslassgehäuse (18) je mit einem Rohrstutzen (20, 22) versehen sind, der in einem Stück mit ihnen geformt wird.

13. Wärmetauscher nach Anspruch 11, **dadurch gekennzeichnet, dass** das Gaseinlassgehäuse (116) mit einem mit ihm aus einem Stück geformten Rohrstutzen (120) versehen ist, während das Gasauslassgehäuse (118) einen Luftansaugverteiler für den Verbrennungsmotor des Fahrzeugs bildet.

## Claims

1. Heat exchanger comprising a heat exchange core (10) determining first circulation channels (46) for the circulation of a gas to be cooled and second circulation channels (48) for the circulation of a cooling liquid, also comprising two manifolds (24, 26) respectively joined to two faces (52, 54) of the core, into which the first circulation channels open, and a gas inlet casing (16) and a gas outlet casing (18) each having an open face delimited by a peripheral flange (68, 70) held by crimping in one of said manifolds, the core (10) consisting of a stack of stamped plates (28) arranged in pairs so that the first channels (46) are each delimited between two pairs of plates and that the second channels (48) are each delimited between the plates of one and the same pair, each of the stamped plates (28) of the core having a generally rectangular form and including a substantially flat bottom wall (30) delimited by a peripheral flange (32) and two end bosses (34, 36) provided with openings (38, 40) for the passage of the cooling liquid from one second channel to another second channel, the peripheral flange (32) of each of the stamped plates (28) being designed to define clips (45) for provisionally holding two plates of one and the same pair with a view to linking them by brazing.

2. Heat exchanger according to Claim 1, **characterized in that** each manifold (24, 26) has the general form of a jacket and comprises a peripheral edge (56) of generally rectangular form delimiting an opening (58) for the passage of gas and having on one side a shouldered flange (62) for receiving a face of the core and on the other side a crimping flange (64) surrounding a groove (66) for receiving the peripheral flange (68, 70) of the gas inlet casing (16) or of the gas outlet casing (18).

3. Heat exchanger according to Claim 2, **characterized in that** the shouldered flange (62) is configured to allow the core to be fitted with compression.

4. Heat exchanger according to one of Claims 1 to 3, **characterized in that** the two manifolds (24, 26) are respectively joined to two opposing faces (52, 54) of the core.

5. Heat exchanger according to one of Claims 1 to 4, **characterized in that** each manifold (24, 26) includes a masked part (60) to prevent the passage of the gas into an end region of the core (10) which does not have first channels (46).

6. Heat exchanger according to any one of the preceding claims, **characterized in that** the bottom wall (30) of each of the stamped plates (28) includes a rib (50) to define a second circualtion channel with a U-shaped passage.

7. Heat exchanger according to any one of the preceding claims, **characterized in that** one (28A) of the stamped plates arranged at the end of the core has two nozzles (12, 14) for the inlet and outlet of the cooling liquid.

8. Heat exchanger according to any one of the preceding claims, **characterized in that** the core (10) also includes corrugated separators (42) arranged respectively in the first channels (46).

9. Heat exchanger according to any one of the preceding claims, **characterized in that** the gas inlet casing (16) and the gas outlet casing (18) are each produced by molding with a chosen form.

10. Heat exchanger according to any one of the preceding claims, **characterized in that** the gas inlet casing (16) and the gas outlet casing (18) are each produced by molding a plastic material.

11. Heat exchanger according to any one of the preceding claims, **characterized in that** it is produced in the form of a supercharging air cooler for a motor vehicle heat engine, the first circulation channels (46) being used to circulate the air to be cooled.

12. Heat exchanger according to Claim 11, **characterized in that** the gas inlet casing (16) and the gas outlet casing (18) are each provided with a nozzle (20, 22) produced by molding.

13. Heat exchanger according to Claim 11, **characterized in that** the gas inlet casing (116) is provided with a nozzle (120) produced by molding, whereas the gas outlet casing (118) forms an air intake diffuser for the vehicle heat engine.
